(19) Europäisches Patentamt
European Patent Office
Office européen des brevets

(11) **EP 3 614 177 A1**

(12) **EUROPEAN PATENT APPLICATION**
published in accordance with Art. 153(4) EPC

(43) Date of publication:
**26.02.2020 Bulletin 2020/09**

(51) Int Cl.:
**G01S 19/02** (2010.01)

(21) Application number: **18787352.6**

(22) Date of filing: **12.04.2018**

(86) International application number:
**PCT/CN2018/082729**

(87) International publication number:
**WO 2018/192402 (25.10.2018 Gazette 2018/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.04.2017 CN 201710261227**
**27.10.2017 CN 201711020413**

(71) Applicant: **Wuhan University**
**Hubei 430072 (CN)**

(72) Inventors:
• **HE, Zhibiao**
**Hubei 430072 (CN)**
• **XIAO, Moyan**
**Hubei 430072 (CN)**

(74) Representative: **Hryszkiewicz, Danuta**
**Matthias Scholl, Inc.**
**Friedrichstrasse 123**
**10117 Berlin (DE)**

(54) **METHOD AND SYSTEM FOR IMPLEMENTING REAL-TIME TRANSMISSION AND DEMODULATION TECHNOLOGY FOR BEIDOU SATELLITE NAVIGATION SIGNALS**

(57) Disclosed in the present invention are a method and system for implementing real-time transmission and demodulation technology for Beidou satellite navigation signals, the method comprising: constructing a large-scale parallel signal transmission branch; grouping satellite navigation messages in a large scale and sequentially sending the messages to the parallel signal transmission branch; driving a complex shift pseudo-random code generator by using a nonlinear function so as to obtain a ranging sub-code dedicated to the navigation satellite parallel transmission branch, and spreading the spectrum of each branch navigation message; first shifting the same carrier modulation at different frequencies, then superposing all branch carrier modulation navigation signals and adding noise to form a composite satellite navigation signal; and finally sending the signal by means of a single antenna; a receiving end respectively demodulating the received navigation signals in real time according to branch by means of a plurality of channels of the single antenna which comprise a subchannel so as to change the messages from parallel transmission to serial transmission; and performing positioning solution according to the navigation messages so as to allow a Beidou satellite navigation positioning system to navigate and position quickly. The present invention may be widely applied to satellite navigation systems, as well as being used in various ranging systems, communication systems, radio and television systems and control systems.

FIG. 1

**Description**

The disclosure relates to the field of satellite navigation technology, and in particular to a method and a system of real-time transmission and demodulation of a BeiDou satellite navigation signal.

Four global major satellite navigation systems include Global Positioning System (GPS) of USA, Global Navigation Satellite System (GLONASS) of Russia, Galileo Navigation Satellite System (GALILEO) of European Union and BeiDou Navigation Satellite System (BDS) of China. The above satellite navigation systems realize navigation positioning by providing navigation messages for users, where the navigation messages of the BeiDou navigation satellite system are divided into traditional D1 and D2 navigation messages and B-CNAV1 and B-CNAV2 navigation messages of a data block format based on information type according to different rates and structures. The D1 and D2 navigation messages include super-frames, main frames, sub-frames and words. The rate of the D1 navigation message is 50 bps (bits/per second) with its content including basic navigation information of the present satellite, almanac information of all satellites and time synchronization information with other systems. The rate of the D2 navigation message is 500 bps with its content including basic navigation information and enhanced service information. Each main frame of the B-CNAV1 navigation message includes three sub-frames with a length being 1800 symbols, a rate being 100 sps (symbols/per second), and a broadcast period being 18 seconds. Each main frame of the B-CNAV2 navigation message has a length of 600 symbol bits with a rate being 200 sps, and a broadcast period being 3 seconds. The super-frame of the D1 navigation message is 36000 bits, each super-frame includes 24 main frames or pages, each main frame is 1500 bits and includes 5 sub-frames, each sub-frame is 300 bits and includes 10 words, and each word is 30 bits and includes navigation message data and a check code. The super-frame of the D2 navigation message is 180000 bits, each super-frame includes 120 main frames or pages, each main frame is 1500 bits and includes 5 sub-frames, each sub-frame is 300 bits and includes 10 words, and each word is 30 bits and includes navigation message data and a check code. The super-frames of B-CNAV1 and B-CNAV2 include 63 main frames respectively. Time required for transmitting different super-frames of the D1, D2, B-CNAV1 and B-CNAV2 navigation messages is 12 minutes, 6 minutes, 18.9 minutes and 3.15 minutes respectively.

Tens of navigation satellites of the above different satellite navigation systems spectrum-spread their respective navigation messages by use of linear ranging codes realized by generating cross-uncorrelated Gold codes, Weil codes and other tiered codes by different linear methods and phase allocation methods respectively, modulated by an offset carrier or the same carrier and then navigation signals are transmitted by the same navigation frequency point. These carrier-modulated navigation signals are received and mutually superimposed at a user end. Since the ranging codes of different navigation satellites are cross-uncorrelated, no mutual interference will occur between their navigation signals. The user obtains the navigation messages of different navigation satellites by intercepting the navigation signals, performing carrier removal through Doppler frequency shift method, and then, performing relevant processing with the ranging codes of different navigation satellites. Therefore, the user may perform navigation positioning by using the navigation messages of at least four navigation satellites. Navigation positioning time of the user includes navigation signal receiving time, navigation signal demodulation time and positioning solution time. Since the positioning solution time is relatively fixed, the navigation signal receiving time and the navigation signal demodulation time directly determines the navigation positioning time of the user. At present, the - 2nd-generation linear navigation signal single-channel serial transmission and demodulation of 40 years ago is adopted by the satellite navigation system, therefore, the user needs to take 3 seconds to 18.9 minutes to receive a satellite navigation signal. Such non-real-time navigation signal transmission and demodulation technology severely affects positioning performance of the user, resulting in the navigation positioning time from tens of seconds to tens of minutes. In addition, to fully utilize limited spectrum resources, the current satellite navigation system modulates and transmits different navigation signals by using a Binary Offset Carrier (BOC) and other different offset carriers. Due to the use of single-channel serial transmission, cross-correlation and correlation demodulations, multi-correlation peaks exist in the generation and receiving demodulation of the navigation signal and a process of separating offset carrier signals is complex. Thus, the transmission and demodulation time of the navigation signal cannot be reduced, and the navigation positioning performance is also low.

At present, the navigation positioning efficiency is mainly improved as follows: ordinary navigation messages are continuously re-transmitted or the navigation messages of the data block format based on information type are used or a navigation signal transmission rate is increased or serial demodulation of a large-scale parallel signal transmission branch is used at the user end or a hot start manner is applied in a case of completely receiving satellite navigation messages. However, the above methods cannot fundamentally solve the problem. Therefore, the navigation positioning time can be fully shortened only by increasing transmission and demodulation speeds of the navigation signals. To increase the transmission speed of the navigation signal of the satellite navigation system, a non-linear function driven complex shift pseudo-random code generator is obtained by a non-linear method in the relevant literature. Navigation satellite ranging codes and different parallel signal transmission branch-dedicated sub-ranging codes are generated through interaction of one group of non-linear functions at a feedback end. The transmission of the navigation signal is changed from serial transmission to parallel transmission by using a small and medium-scale parallel signal transmission branch to realize high-speed parallel transmission of the navigation signal, thereby fully improving a transmission efficiency of the navigation signal of the satellite navigation system. According to this method, the navigation messages are serially allocated in particular order to different parallel signal transmission branches, and the navigation signals are transmitted by several antennas, thereby satisfying a quasi-rapid navigation positioning requirement of the user.

In addition, a solar-charged battery supplies power for the BeiDou navigation satellite, and the battery powers other loads of the system in addition to ensuring the transmission power of navigation signals at different frequency points. Therefore, by adopting the large-scale multi-antenna parallel signal transmission branch, it cannot be ensured that the navigation signals transmitted by different antennas have sufficient use power. In this case, high-speed transmission of the navigation signals cannot be realized and the rapid positioning requirement of the user is not satisfied.

In conclusion, at present, the four major global satellite navigation systems including the BeiDou Navigation Satellite System can only provide pseudo-rapid navigation positioning services. However, the multi-antenna navigation signal high-speed transmission technology may realize the quasi-rapid navigation positioning. Therefore, to ensure the BeiDou Navigation Satellite System provide the real quick navigation positioning service to users, the development of the real-time transmission and demodulation of satellite navigation signals is a critical technical problem to be solved.

To overcome the above technical problem, the disclosure provides a method and a system of real-time transmission and demodulation of a BeiDou satellite navigation signal to fully improve satellite navigation positioning performance.

To solve the above technical problem, the disclosure adopts the following technical solutions.

The method of real-time transmission and demodulation for BeiDou satellite navigation signals comprises:

1) constructing parallel signal transmission branches that total number is $m_t$ to meet the demands of the real-time transmission for the subsequent grouping satellite messages, where the parallel signal transmission branches can be divided into the middle and small scale parallel signal transmission branches(less than 100 branches), the large-scale parallel signal transmission branches (no less than 100 branches) and the super-scale parallel signal transmission branches (no less than 1000 branches);

2) generating the satellite navigation messages by the given structure or constructing the satellite navigation messages by the given length data block of the same or different information combination, grouping the obtained messages by the given length unit and compose matrix according to the given length; from the grouping on the given length unit, it is particular on the structure of the navigation messages including the grouping on the super-frame, the main-frame, the sub-frame, the word, the data block, or the number of the setting length bits;
In an ordinary manner, the satellite navigation messages are generated and large-scale grouping is performed by dividing a total number, in the unit of words, of words contained in the super-frame by the number of the large-scale parallel signal transmission branches to obtain a grouping number.

3) sending the grouping satellite navigation messages to the large-scale parallel signal transmission branches in order according to the row or the column;

4) designing a real part by a group of nonlinear functions with the weights of different nonlinear diffusion coefficients, composing a nonlinear function by the mixed computation of a kind of single state parameter, multistate parameter or function comprising the different parameters, designing an imaginary part by another group of the nonlinear functions with the weights of the different nonlinear diffusion coefficients, composing the nonlinear function by the mixed computation of another kind of single state parameter, multistate parameter or function comprising the different parameters, driving the nonlinear function interaction by an action value which is obtained by the mixed computation from the relative register taps and is as a feedback end obtained by the mixed computation of the action value of these nonlinear functions, constructing a complex shift pseudo-random code generator driven by the nonlinear functions, which the real part and the imaginary part of a relative register state value construct the real part sub pseudo-random code generator and the imaginary part sub pseudo-random code generator separately;

5) setting up the parameters comprising the series of the complex shift pseudo-random code generator driven by the nonlinear functions and the generated code length;

6) initializing the state value of the complex shift pseudo-random code generator driven by the nonlinear functions with the same or different complex data;

7) outputting a pseudo-random number through part of the combination taps of the real part and imaginary part of the relative register state value of the complex shift pseudo-random code generator driven by the nonlinear functions, obtaining the navigation satellite ranging codes by the sorting algorithm, the binarization and modular two addition, which are regarded as special sub-ranging codes of the first or non the first parallel signal transmission branch to test the existence of the navigation signals of the navigation satellite in the intercepted basic band satellite navigation signals;

8) outputting the pseudo-random number through another part of the combination taps of the real part and imaginary part of the relative register state value of the complex shift pseudo-random code generator driven by the nonlinear functions, obtaining the public sub-ranging codes of the parallel signal transmission branches of all the navigation satellites by the sorting algorithm, the binarization and modular two addition, which are called the public sub-ranging codes of the navigation satellite, where a sum of the number of ranging codes of all navigation satellites and the number of the public sub-ranging codes of all the navigation satellites is not greater than the total number of the combination taps of the real part and imaginary part of all the register state value of the complex shift pseudo-random code generator; there is relative, irrelative, orthogonal, non-orthogonal, partly orthogonal or partly non-orthogonal among the above public sub-ranging codes of the navigation satellite;

9) obtaining a plurality of special sub-ranging codes of other parallel signal transmission branches by modular two addition of the ranging codes of the navigation satellite and the public sub-ranging codes of the navigation satellite, which are called the special sub-ranging codes of the navigation satellite, saving the special sub-ranging codes of the navigation satellite in the file or data buffer area to meet the demands of the real-time spread spectrum of the navigation messages of each parallel signal transmission branch;

10) obtaining the special sub-ranging codes of the navigation satellite by the real-time generation, the file or the data buffer area, taking spread spectrum on the grouping satellite navigation messages of the parallel signal transmission branches separately by the special sub-ranging codes of the navigation satellite, where one of the above methods to obtain the special sub-ranging codes of the navigation satellite is available in use;

11) modulating a plurality of spread spectrum signals of the parallel signal transmission branches separately by a carrier with the different frequency offset, a complex carrier with the different frequency offset, a different phase orthogonal sub-carrier with the different frequency offset or a different phase orthogonal complex sub-carrier with the different frequency offset, where one of the modulation methods is available in use;

12) distributing the signal power of each branch reasonably by the adjustment of the gain factors of the special sub-ranging codes of the navigation satellite of each branch to carry out the power balance, superposing the carrier modulation signals of all parallel signal transmission branches or the carrier modulation signals of the satellite navigation signals of the other branch or combining into one way signals, which are less interference because of the uncorrelation of the special sub-ranging codes of the navigation satellite for each parallel signal transmission branch;

13) adding the Gauss white noise or the other noise with some ratio of signal and noise to the superposed or combined one-way signals to form a plurality of basic band satellite navigation signals;

14) transmitting the basic band satellite navigation signals from single-antenna;

15) receiving the basic band satellite navigation signals by single-antenna single-channel, single-antenna single-channel comprising the sub-channel, single-antenna multichannel, single-antenna multichannel comprising the sub-channel; the channel realization mode is $m_r \times n_r$, where $m_r$ is a channel number, $n_r$ is a sub-channel number of each channel, demodulating the navigation signals of the parallel signal transmission branches in range of the given number of the satellite transmission end real-time separately in order for each sub-channel, multiantenna single-channel, multiantenna single-channel comprising the sub-channel, multiantenna multichannel, or multiantenna multichannel comprising the sub-channel; where the single-antenna single-channel or single-antenna single-channel comprising the sub-channel is the channel that each antenna only connects one signal dealing channel; the channel or its containing sub-channel is responsible for receiving and dealing of all satellites navigation signals; the single-antenna multichannel, single-antenna multichannel comprising the sub-channel is the channel that each antenna connects no less than two signal dealing channels and each channel or its containing sub-channel is responsible for receiving and dealing of the corresponding satellites navigation signals; the multiantenna single-channel or their containing sub-channels are the channel that each antenna only connects one signal dealing channel separately; the multiantenna multichannel or their containing sub-channels are the channel that each antenna connects no less than two signal dealing channels and each channel or its containing sub-channel is responsible for receiving and dealing of the corresponding satellites navigation signals; needing the number of the channels or their containing sub-channels for signal dealing to guarantee the real-time demodulation of the received satellite navigation signals, choosing one of the channels and its $n_r$ sub-channels to explain the real-time demodulation process on the navigation signals of one navigation satellite because each channel demodulates separately the navigation signals of no less than one navigation satellite and the realization mode is the same;

16) choosing the sub-channel number $i_r(1 \le i_r \le n_r)$, where a parallel signal transmission branch number it that the sub-channel corresponds to the satellite transmission end is equal to a parallel signal transmission branch start number that the sub-channel of the channel corresponds to the satellite transmission end;

17) intercepting a length of the basic band satellite navigation signals;

18) generating the local carrier or the complex carrier;

19) obtaining the de-carrier signals by the Doppler frequency shift carrier matching method to remove the carriers from the satellite navigation signals of 17);

20) obtaining the special sub-codes of the parallel signal transmission branches by the real-time generation, the file, or the data buffer; carrying out the relative dealing based on FFT circle relative algorithm with the special sub-codes by the de-carrier signals through the sorting algorithm and the binarization; when $i_r$=1 and there exists the relative peak, it shows that the navigation signals of the navigation satellite exist in the received signals; when $i_r$>1 and there exists the relative peak, demodulating the navigation messages from the de-carrier signals of the received basic band satellite navigation signals of the branch according to the relative peak position, performing 21), otherwise, performing 17);

21) it=it+1, when it $\le$ the parallel signal transmission branch end number that the sub-channel of the channel corresponds to the satellite transmission end, performing 17), otherwise, performing 22);

22) converting the grouping navigation messages from the parallel to the serial obtained from the parallel signal transmission branches of each sub-channel, obtaining the complete navigation messages of one navigation satellite from the channel;

23) obtaining the navigation messages of the visual navigation satellites by each channel from 16) to 22), carrying out the positioning solution by selecting navigation messages of four navigation satellites and using microprocessor with no less than one core, realizing the fast navigation positioning; and

24) end.

According to the above solution in 4), the single-state variable or the multistate variable or the function containing different parameters at the feedback end of the non-linear function driven complex shift pseudo-random code generator is repeatedly used in the construction of the non-linear functions, and the constructed non-linear functions are repeatedly used in different non-linear function action formulas, and different non-linear functions work at a same frequency or different frequencies.

According to the above solution in 7), the pseudo-random number tap-output by the real part and the imaginary part of the state value of the register respectively is binarized. The processing manner of changing the pseudo-random number into a pseudo-random code by a statistical analysis method is simple. If the tap-output pseudo-random code sequence is different from another tap-output pseudo-random code sequence in one part of values and the other part of values are same or their values are totally same, processing is performed in the following manner: performing inversion for all values of the pseudo-random code sequence; or, performing cyclic shifting for the pseudo-random code sequence with a set code length; or mixing the pseudo-random code sequence with another pseudo-random code sequence; or deleting one of the pseudo-random code sequences.

According to the above solution in 8), the navigation satellite public sub-ranging codes are generated by combining the remaining taps of the variables or the functions or the register state values of different sub-pseudo-random code generators of the pseudo-random code generator that generates navigation satellite ranging codes and is formed by different sub-pseudo-random code generators, or by combining joint taps of the variables or the functions or the register state values of another pseudo-random code generator, or by combining individual taps of the variables or the functions or the register state values of different sub-pseudo-random code generators of another pseudo-random code generator formed by different sub-pseudo-random code generators; or real numbers output by these taps are modulated by real number offset carriers respectively and pseudo-randomness of subsequently generated pseudo-random codes maintained by adjusting relevant parameters of the non-linear functions constructing the pseudo-random code generator, or under a condition that the taps of the variables or the functions or given state values of the register structure of the pseudo-random code generator are unchanged, different navigation satellite ranging codes or navigation satellite public sub-ranging codes or navigation satellite-dedicated sub-ranging codes with different navigation frequency points satisfying different navigation service requirements are generated in a unified manner by changing initial values or changing the relevant parameters of the non-linear functions constructing the pseudo-random code generator or re-designing the non-linear functions constructing the pseudo-random code generator, where one part of tap combinations of all tap combinations of the variables or functions or register state values of different sub-pseudo-random code generators of the pseudo-random code generator are used to perform phase allocation for the navigation satellite ranging codes, another part of tap combinations are used to perform phase allocation for the navigation satellite public sub-ranging codes or navigation satellite-dedicated sub-ranging codes, and the remaining tap combinations are used as backup for future extensions.

According to the above solution in 7) and 8), binarization is performed by a sorting method. That is, the pseudo-random numbers are sorted in an ascending or descending order, a middle value thereof is taken as a threshold. The pseudo-random numbers greater than or equal to the threshold are valued as 1, and the pseudo-random numbers smaller than the threshold are valued as 0.

According to the above solution in 9), the navigation satellite ranging code is individually used as the dedicated sub-ranging code of one parallel signal transmission branch, or used as the dedicated sub-ranging code of one parallel signal transmission branch after being subjected to modulo-2 sum or mixed with the public sub-ranging codes of one navigation satellite; or the navigation satellite-dedicated sub-ranging codes are modulated by a binary offset carrier respectively and the pseudo-randomness of the dedicated sub-ranging code is maintained by adjusting relevant parameters of the non-linear functions constructing the pseudo-random code generator; all navigation satellite-dedicated sub-ranging codes are prestored in a dedicated file or data buffer zone in an order to improve real-time spectrum spread of navigation messages of different parallel signal transmission branches or real-time demodulation of navigation signals.

According to the above solution in 10), different parallel signal transmission branches transmits same or different types of non-multiplexed or multiplexed satellite pilot signals or satellite navigation signals or satellite communication signals at the same time.

According to the above solution in 11), the Doppler frequency shift is in a range of (-10 kHz, 10 kHz).

According to the above solution in 13), the signal-to-noise ratio of the satellite navigation signal is in a range of (-15 dB, 0 dB).

According to the above solution in 14), the carrier signals of the parallel signal transmission branch are divided into different parts or superimposed or combined with carrier signals of satellite navigation signals of other branches for multi-antenna transmission performed through at least two antennas, or spread spectrum signals of parallel signal transmission branches are superimposed or combined with partial or all spread spectrum signals of satellite navigation signals of other branches and modulated by same carriers or sub-carriers with different orthogonal phases for multi-antenna transmission performed through the single antenna or at least two antennas.

According to the above solution in 15), the non-multiplexed or multiplexed satellite pilot signal or the satellite navigation signal or the satellite communication signal or a satellite control signal is received or sent between the navigation satellite and a ground receiver or between the navigation satellite and a ground station or between the navigation satellites or between a ground based augmentation system and both the navigation satellite and the ground receiver through the single-antenna single-channel or each sub-channel contained in the single-antenna single-channel or the single-antenna multi-channel or each sub-channel contained in the single-antenna multi-channel or the multi-antenna single-channel or each sub-channel contained in the multi-antenna single-channel or the multi-antenna multi-channel or each sub-channel contained in the multi-antenna multi-channel, where each channel containing sub-channels contains same or different numbers of sub-channels respectively.

A system of real-time transmission and demodulation of a BeiDou satellite navigation signal comprises:

a module of parallel signal transmission branch construction, which is used to meet the demands of the grouping of the navigation messages and the navigation signals quasi-real-time transmission or real-time transmission;

a module of navigation messages being grouped and converted from the serial to the parallel, which is used to group the navigation messages in the given length, and convert the serial transmission to the parallel transmission and to promote the transmission efficiency;

a module of a complex shift pseudo-random code generator driven by the nonlinear functions construction, which is used to design the real part by a group of the nonlinear functions with the weights of different nonlinear diffusion coefficients; the nonlinear function is composed of the mixed computation of a kind of single state parameter, multistate parameter or the function comprising the different parameters; the imaginary part is designed by another group of the nonlinear functions with the weights of the different nonlinear diffusion coefficients; the nonlinear function is composed of the mixed computation of another kind of single state parameter, multistate parameter or the function comprising the different parameters; the nonlinear function interaction is driven by the action value which is obtained by the mixed computation from the relative register taps; the action value is as the feedback end obtained by the mixed computation of the action value of the stated nonlinear functions to construct the complex shift pseudo-random code generator driven by the nonlinear functions;

a module of sub-ranging codes generation, which is used to output the pseudo-random number through one part of the combination taps of the real part and imaginary part of the relative register state value of the complex shift pseudo-random code generator driven by the nonlinear functions; the navigation satellite ranging codes are obtained by the sorting algorithm, the binarization and modular two addition of the pseudo-random number; the public sub-ranging codes are obtained by the sorting algorithm, the binarization and modular two addition of the pseudo-random number through another part of the combination taps of the real part and imaginary of the relative register state value of the complex shift pseudo-random code generator driven by the nonlinear functions; the special sub-ranging codes are gained by modular two addition of the public sub-ranging codes and the ranging codes of the navigation satellite separately;

a module of spread spectrum, which is used to take spread spectrum on the grouping navigation messages of the parallel signal transmission branches by the special sub-ranging codes of the navigation satellite separately;

a module of carrier modulation, which is used to modulate separately the spread spectrum signals of the parallel signal transmission branches by the same carrier with the different frequency offset, the same complex carrier with the different frequency offset, the different phase orthogonal sub-carrier with the different frequency offset or the different phase orthogonal complex sub-carrier with the different frequency offset;

a module of signal superposition, which is used to superpose or combine the spread spectrum signals of all or part of the parallel signal transmission branches, the carrier modulation signals of all or part of the parallel signal transmission branches, the spread spectrum signals of the satellite navigation signals of the other branch, or the carrier modulation signals of the satellite navigation signals of the other branch;

a module of navigation signal generation, which is used to add Gauss white noise or the other noise to the superposed or combined signals to generate the basic band satellite navigation signals;

a module of tracing and capturing, which is used to decarrier, despread and demodulate the navigation signals of each parallel signal transmission branch for the transmission end of the navigation satellite separately;

a module of converting the parallel to the serial of the navigation messages, which is used to convert the parallel transmission to the serial transmission of the grouping navigation messages obtained from the decarrier, the despreading and the demodulation of the parallel signal transmission branches and realize the obtaining of the total navigation messages; and

a module of positioning and solution, which is used to take the obtained navigation messages to realize the fast navigation and positioning.

According to the above solution, the tracking and capturing module is specifically operated as follows:

i) receiving the basic band satellite navigation signals by the receiving end to use single-antenna multichannel or single-antenna multichannel comprising the sub-channel;

ii) choosing the sub-channel number $i_r (1 \leq i_r \leq n_r)$, where the parallel signal transmission branch number it that the sub-channel corresponds to the satellite transmission end = the parallel signal transmission branch start number that the sub-channel of the channel corresponds to the satellite transmission end;

iii) intercepting a length of the basic band satellite navigation signals;

iv) generating the local carrier or the complex carrier;

v) obtaining the de-carrier signals by the Doppler frequency shift carrier matching method to remove the carriers of the satellite navigation signals from iii);

vi) obtaining special sub-codes of the parallel signal transmission branch by the real-time generation, the file, or the data buffer; carrying out the relative dealing based on FFT circle relative algorithm with the special sub-codes by the de-carrier signals through the sorting algorithm and the binarization; when $i_r$=1 and there exists the relative peak, it shows that exist the navigation signals of the navigation satellite in the received signals; when $i_r$>1 and there exists the relative peak, the navigation messages are demodulated from the de-carrier signals of the received basic band satellite navigation signals of the branch according to the relative peak position, perform vii), otherwise, perform iii);

vii) $i_t$=$i_t$+1, when it $\leq$ the parallel signal transmission branch end number that the sub-channel of the channel corresponds to the satellite transmission end, performing iii), otherwise, performing viii); and

viii) converting the grouping navigation messages from the parallel to the serial obtained from the parallel signal transmission branches of each sub-channel; and gaining the complete navigation messages of one navigation satellite from the channel.

Compared with the prior art, the disclosure has the following advantages and beneficial effects.

(1) All navigation satellites share the same pseudo-random code generators.
All navigation satellites obtain public sub-ranging codes by using the pseudo-random code generators generating the navigation satellite ranging codes, greatly reducing the number of the pseudo-random code generators generating the sub-ranging codes and fully lowering hardware costs.
(2) Ranging codes of different frequency points are generated by a unified method.
In a case that the structure and the tap of the correlation register of the pseudo-random code generator are unchanged, different navigation satellite ranging codes with different navigation frequency points satisfying different navigation service requirements are generated by changing correlation values through the unified method.
(3) The navigation satellite transmits multi-branch navigation signals by the single antenna.
Different parallel signal transmission branches of the navigation satellite transmitter use well-uncorrelated dedicated sub-ranging codes carrying the ranging code information of the navigation satellite, different branch navigation messages are superimposed into single-channel signals after spectrum spread and modulation, and then transmitted by the single antenna, greatly reducing the number of transmitting antennas at the satellite end.
(4) The satellite navigation signal can be transmitted and demodulated in real time.
The satellite navigation signal can be transmitted and demodulated in real time since the large-scale parallel signal transmission and demodulation technology is adopted for the satellite navigation signal.
(5) The technical problem of multi-correlation peaks existing in the demodulation of the offset-carrier-modulated navigation signal is solved.
The pseudo-randomness of the offset carrier modulated spread spectrum signal is maintained by adjusting the relevant parameters of the non-linear function for constructing the pseudo-random code generator, and thus, the problem of multi-correlation peaks arising from the offset carrier modulation is eliminated by the relevant demodulation, and the navigation signal demodulation time is shortened.
(6) Rapid satellite navigation positioning can be performed.
The rapid satellite navigation positioning can be realized by performing positioning solution for the obtained satellite navigation message through real-time transmission and demodulation of the satellite navigation signal.

FIG. 1 is a flowchart of a method according to an example of the disclosure.

FIG. 2 illustrates a 1-st branch-dedicated sub-ranging code according to an example of the disclosure.

FIG. 3 illustrates a 110th branch-dedicated sub-ranging code according to an example of the disclosure.

FIG. 4 illustrates a spread spectrum signal of a 110th branch according to an example of the disclosure.

FIG. 5 illustrates carrier signal superimposition and noise addition of 110-115th parallel signal transmission branches according to an example of the disclosure.

FIG. 6 illustrates a carrier-removed signal of a 7th sub-channel of a 1st channel according to an example of the disclosure.

FIG. 7 illustrates a carrier-removed binarized signal of FIG. 6 according to an example of the disclosure.

FIG. 8 illustrates a tracked and captured signal of a navigation signal under a condition of a signal-to-noise ratio being -10 dB, a frequency shift being 16 Hz and a code shift being 349 bits according to an example of the disclosure.

FIG. 9 illustrates different modules according to an example of the disclosure.

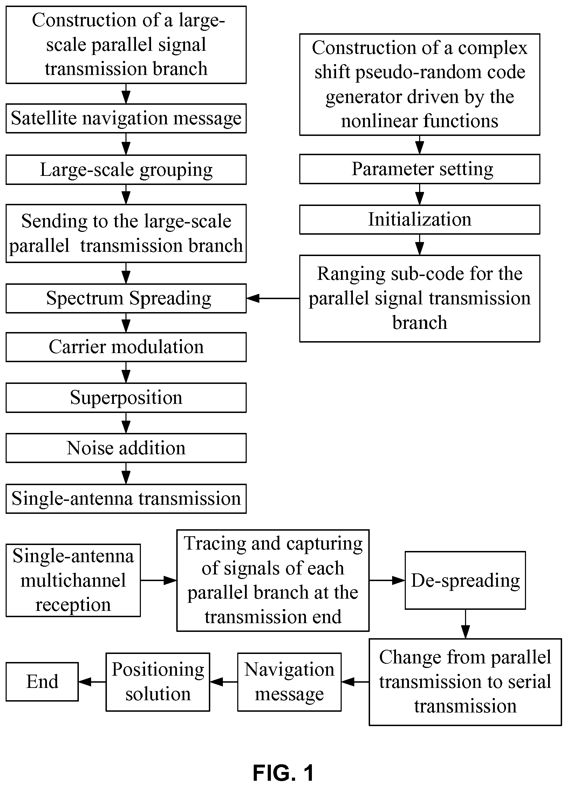

In an example, a navigation satellite transmitter implemented as a large-scale parallel signal transmission branch system is described through the following blocks according to FIG. 1.

At block S1, a total number of satellite parallel signal transmission branches is selected as mt=256.

At block S2, a binary satellite navigation message with a length of 1536 bits is generated and then divided into 256 groups with each group being 6 bits to form a 256×6 matrix.

At block S3, the grouped satellite navigation messages are sequentially sent into 1st-256th parallel signal transmission branches in rows respectively.

At block S4, a hybrid operation is performed with three x state variables x1, x2 and x3 and a sin function containing different parameters, and a real part is formed by designing one group of non-linear functions with different diffusion coefficients as weights; by a hybrid operation is performed with three y state variables y1, y2 and y3 and a cos function containing different parameters, and an imaginary part is formed by designing another group of non-linear functions with different diffusion coefficients as weights. The interactions of the non-linear functions are driven by performing a hybrid operation with the correlation register tap values. A non-linear function driven complex right shift pseudo-random code generator is constructed with the hybrid operation action values of these non-linear function action values as a feedback end.

At block S5, a series of the non-linear function driven complex right shift pseudo-random code generator is selected as 5 with a length of a generated code being 128 bits, where the total number of tap combinations of the real part and the imaginary part of the register state value of the non-linear function driven complex right shift pseudo-random code generator is not less than 600. A part of the remaining taps no more than 600 are used to generate public sub-ranging codes of all navigation satellites except for 35 taps reserved for 35 BeiDou satellites to generate navigation satellite ranging codes.

At block S6, the state value of the non-linear function driven complex right shift pseudo-random code generator is initialized with 0.1+0.1j.

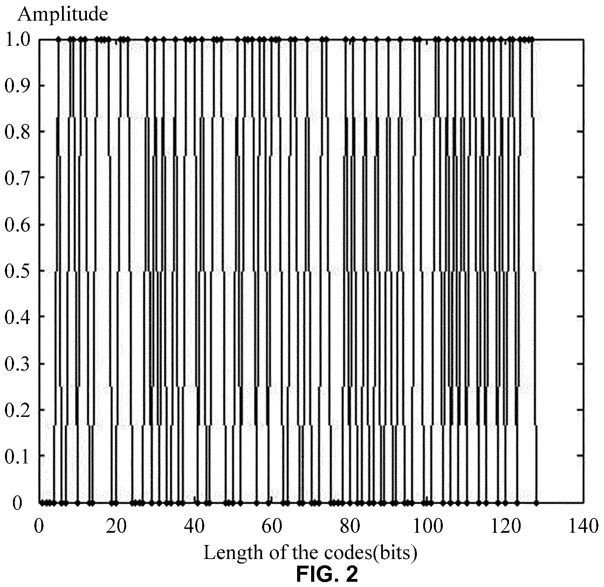

At block S7, a pseudo-random number of 150 seconds is output by combining any tap of the real part of each register state value of the non-linear function driven complex right shift pseudo-random code generator with any three taps of the imaginary part of each register state value, a pseudo-random number of 128 seconds is intercepted by delaying 5 seconds respectively, binarization and modulo-2 sum are performed for the pseudo-random number by a sorting method respectively to obtain a BeiDou navigation satellite ranging code of 128 bits and take the ranging code as a BeiDou navigation satellite-dedicated sub-ranging code of the 1st parallel signal transmission branch, as shown in FIG. 2.

At block S8, a pseudo-random number of 150 seconds is output by combining any three taps and any four taps of the real part of each register state value of the non-linear function driven complex right shift pseudo-random code generator with one to five taps of the imaginary part of each register state value, the pseudo-random number of 128 seconds is intercepted by delaying 5 seconds respectively, and the 2nd-256th navigation satellite public sub-ranging codes of 128 bits of the BeiDou navigation satellite are obtained by binarizing the pseudo-random numbers by the sorting method respectively.

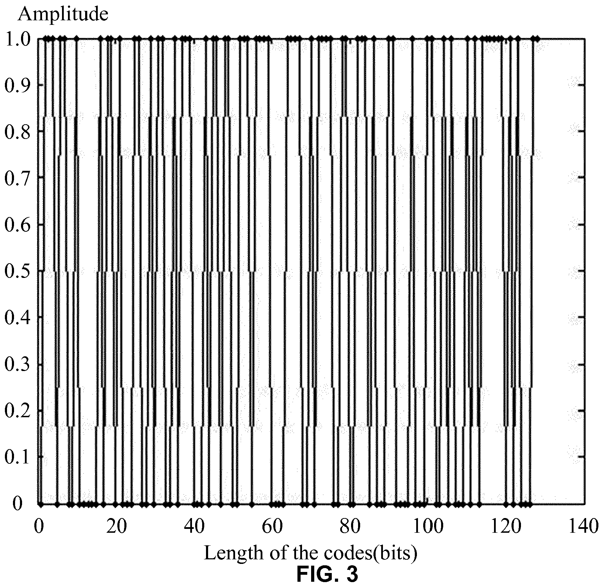

At block S9, the navigation satellite-dedicated sub-ranging codes of 128 bits of the 2nd-256th parallel signal transmission branches of the BeiDou navigation satellite are obtained by performing modulo-2 sum for the BeiDou navigation satellite ranging codes and the 2nd-256th navigation satellite public sub-ranging codes, and then stored in a data buffer zone, as shown in FIG. 3.

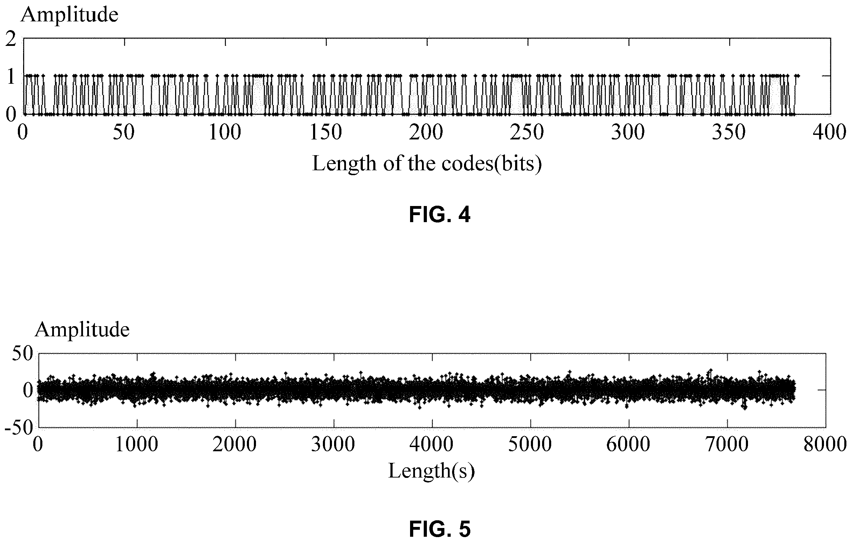

At block S10, spectrum spreading is performed for each bit of the grouped navigation message in the 1st-256th parallel signal transmission branches respectively with three BeiDou navigation satellite-dedicated sub-ranging codes of each branch as one group, as shown in FIG. 4.

At block S11, spread spectrum signals in the parallel signal transmission branches are modulated respectively by using a complex carrier with a particular frequency offset.

At block S12, because a desktop computer takes an extremely long period of time to perform simulation processing for 256 channels of signals, a total of 16 branches i.e. from the 100th to 115th channels of the 256 channels, are selected for superimposing the navigation signals into single-channel signals.

At block S13, a BeiDou navigation satellite baseband transmission signal is formed by adding Gaussian white noise of -10 dB to the superimposed single-channel signal, as shown in FIG. 5.

At block S14, the BeiDou navigation satellite baseband transmission signal is transmitted by a single antenna.

At block S15, a receiver receives the BeiDou navigation satellite baseband transmission signal through a sub-channel ($m_r$=16, $n_r$=16) contained in a single-antenna multi-channel, where each sub-channel performs real-time demodulation for the navigation signal of the parallel signal transmission branch with the sequence number as (

(sub-channel sequence number $-1$)$\times$ $\dfrac{m_t}{n_r}$ $+1\sim$ $\dfrac{m_t}{n_r}$ $\times$ sub-channel sequence number) in the Bei-

Dou satellite transmitter. Since each channel demodulates the navigation signal in the same process, each channel is required to demodulate the navigation signals of at least two BeiDou satellites. A process of demodulating the navigation signal of one BeiDou satellite in real time through the 1st channel and its 16 sub-channels will be described below.

At block S16, a sub-channel sequence number is selected as $i_r(1\leq i_r\leq16)$, and a starting sequence number of the parallel signal transmission branch of the BeiDou satellite transmitter corresponding to the sub-channel is $i_t$=($i_r$-1)$\times$16+1.

At block S17, a segment of baseband satellite navigation signal is intercepted.

At block S18, a local carrier or a complex carrier is generated.

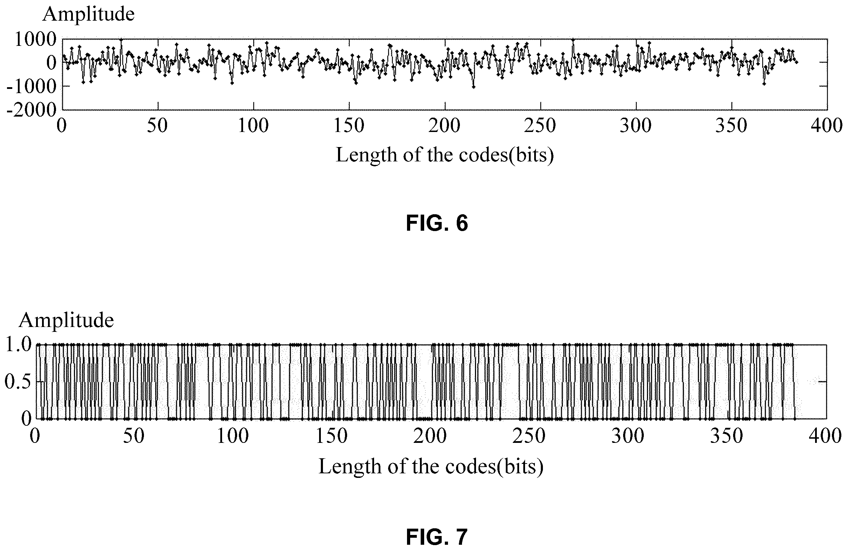

At block S19, a carrier-removed signal is obtained by performing carrier removal for the navigation signal obtained at block S17 by the Doppler frequency shift carrier matching method, as shown in FIG. 6.

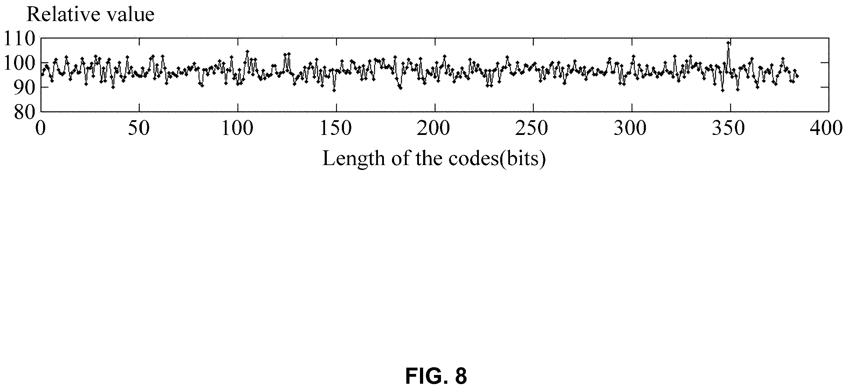

At block S20, the BeiDou navigation satellite-dedicated sub-ranging code of the parallel signal transmission branch is obtained through a data buffer zone and the carrier-removed signal is binarized by the sorting method (shown in FIG. 7) to perform relevant processing by an FFT-based cyclic correlation method; if $i_r$=1 and a correlation peak exists (shown in FIG. 8), it indicates that a signal of the navigation satellite exists in the received signals; if $i_r$>1 and the correlation peak exists, the navigation message is demodulated from the carrier-removed signals of the baseband satellite navigation signals received by the branch according to the position of the correlation peak, and block S21 is performed; otherwise, block S17 is performed.

At block S21, $i_t$=$i_t$+1; if $i_t\leq16\times i_r$, block S17 is performed; otherwise, block S22 is performed.

At block S22, the grouped navigation messages obtained from the parallel signal transmission branches of 16 sub-channels are changed from parallel transmission to serial transmission, and a complete navigation message of one navigation satellite is obtained through the channel.

At block S23, the visual navigation messages of Beidou navigation satellites are obtained through 16 channels respectively according to blocks S16-S22, and positioning solution is performed for navigation messages of four BeiDou satellites selected by using a microprocessor containing four cores to realize rapid navigation positioning.

At block S24, the process is ended.

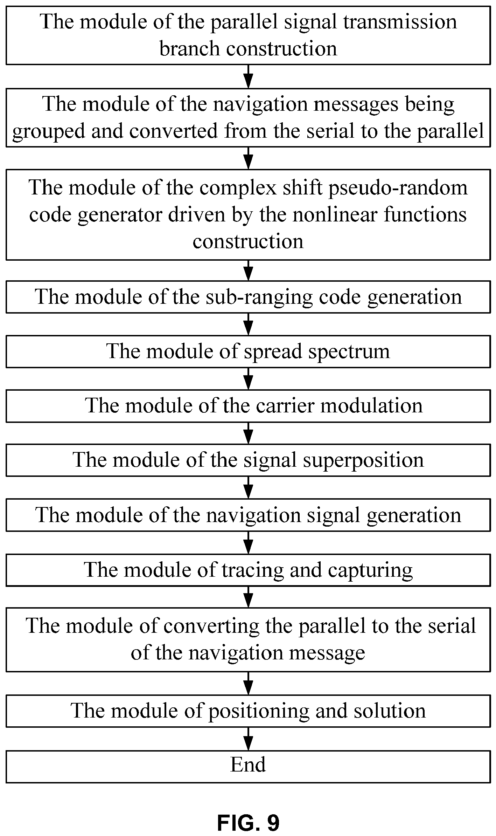

As shown in FIG. 9, a system of real-time transmission and demodulation of a BeiDou satellite navigation signal comprises:

a module of parallel signal transmission branch construction, which is used to meet the demands of the grouping of the navigation messages and the navigation signals quasi-real-time transmission or real-time transmission;

a module of navigation messages being grouped and converted from the serial to the parallel, which is used to group the navigation messages in the given length, and convert the serial transmission to the parallel transmission and to promote the transmission efficiency;

a module of a complex shift pseudo-random code generator driven by the nonlinear functions construction, which is used to design the real part by a group of the nonlinear functions with the weights of different nonlinear diffusion coefficients; the nonlinear function is composed of the mixed computation of a kind of single state parameter, multistate parameter or the function comprising the different parameters; the imaginary part is designed by another group of the nonlinear functions with the weights of the different nonlinear diffusion coefficients; the nonlinear function is composed of the mixed computation of another kind of single state parameter, multistate parameter or the function comprising the different parameters; the nonlinear function interaction is driven by the action value which is obtained by the mixed computation from the relative register taps; the action value is as the feedback end obtained by the mixed computation of the action value of the stated nonlinear functions to construct the complex shift pseudo-random code generator driven by the nonlinear functions;

a module of sub-ranging codes generation, which is used to output the pseudo-random number through one part of the combination taps of the real part and imaginary part of the relative register state value of the complex shift pseudo-random code generator driven by the nonlinear functions; the navigation satellite ranging codes are obtained by the sorting algorithm, the binarization and modular two addition of the pseudo-random number; the public sub-ranging codes are obtained by the sorting algorithm, the binarization and modular two addition of the pseudo-random number through another part of the combination taps of the real part and imaginary of the relative register state value of the complex shift pseudo-random code generator driven by the nonlinear functions; the special sub-ranging codes are gained by modular two addition of the public sub-ranging codes and the ranging codes of the navigation satellite separately;

a module of spread spectrum, which is used to take spread spectrum on the grouping navigation messages of the parallel signal transmission branches by the special sub-ranging codes of the navigation satellite separately;

a module of carrier modulation, which is used to modulate separately the spread spectrum signals of the parallel signal transmission branches by the same carrier with the different frequency offset, the same complex carrier with the different frequency offset, the different phase orthogonal sub-carrier with the different frequency offset or the different phase orthogonal complex sub-carrier with the different frequency offset;

a module of signal superposition, which is used to superpose or combine the spread spectrum signals of all or part of the parallel signal transmission branches, the carrier modulation signals of all or part of the parallel signal transmission branches, the spread spectrum signals of the satellite navigation signals of the other branch, or the carrier modulation signals of the satellite navigation signals of the other branch;

a module of navigation signal generation, which is used to add Gauss white noise or the other noise to the superposed or combined signals to generate the basic band satellite navigation signals;

a module of tracing and capturing, which is used to decarrier, despread and demodulate the navigation signals of each parallel signal transmission branch for the transmission end of the navigation satellite separately;

a module of converting the parallel to the serial of the navigation messages, which is used to convert the parallel transmission to the serial transmission of the grouping navigation messages obtained from the decarrier, the despreading and the demodulation of the parallel signal transmission branches and realize the obtaining of the total navigation messages; and

a module of positioning and solution, which is used to take the obtained navigation messages to realize the fast navigation and positioning.

It is to be understood that those of ordinary skill in the art may make improvements or modifications in accordance with the above descriptions, and all such improvements or modifications shall be encompassed in the scope of protection of the appended claims.

## Claims

1. A method of real-time transmission and demodulation of BeiDou satellite navigation signals, the method comprising:

1)constructing a middle and small scale parallel signal transmission branches or a large-scale parallel signal transmission branches or a super-scale parallel signal transmission branches to meet the demands of the real-time transmission for subsequent grouping satellite messages; wherein the transmission branch number of the stated middle and small scale parallel signal transmission branch is less than 100 branches, the transmission branch number of the stated the large-scale parallel signal transmission branch is no less than 100 branches and transmission branch number of the stated the super-scale parallel signal transmission branch is no less than 1000 branches;
2)generating the satellite navigation messages by the given structure or constructing the satellite navigation messages by the given length data block of the same or different information combination, grouping the obtained messages by the given length unit and compose matrix according to the given length; from the grouping on the given length unit, it is particular on the structure of the navigation messages comprising the grouping on the super-frame, the main-frame, the sub-frame, the word, the data block, or the number of the setting length bits;
3)sending the grouping satellite navigation messages to the large-scale parallel signal transmission branches in order according to the row or the column;
4)designing a real part by a group of nonlinear functions with the weights of different nonlinear diffusion coefficients, composing a nonlinear function by the mixed computation of a kind of single state parameter, multistate parameter or function comprising the different parameters, designing an imaginary part by another group of the nonlinear functions with the weights of the different nonlinear diffusion coefficients, composing the nonlinear function by the mixed computation of another kind of single state parameter, multistate parameter or function comprising the different parameters, driving the nonlinear function interaction by an action value which is obtained by the mixed computation from the relative register taps and is as a feedback end obtained by the mixed computation of the action value of these nonlinear functions, constructing a complex shift pseudo-random code generator driven by the nonlinear functions, which the real part and the imaginary part of a relative register state value construct the real part sub pseudo-random code generator and the imaginary part sub pseudo-random code generator separately;

5) setting up the parameters comprising the series of the complex shift pseudo-random code generator driven by the nonlinear functions and the generated code length;

6) initializing the state value of the complex shift pseudo-random code generator driven by the nonlinear functions with the same or different complex data;

7) outputting a pseudo-random number through part of the combination taps of the real part and imaginary part of the relative register state value of the complex shift pseudo-random code generator driven by the nonlinear functions, obtaining the navigation satellite ranging codes by the sorting algorithm, the binarization and modular two addition, which are regarded as special sub-ranging codes of the first or non the first parallel signal transmission branch to test the existence of the navigation signals of the navigation satellite in the intercepted basic band satellite navigation signals;

8) outputting the pseudo-random number through another part of the combination taps of the real part and imaginary part of the relative register state value of the complex shift pseudo-random code generator driven by the nonlinear functions, obtaining the public sub-ranging codes of the parallel signal transmission branches of all the navigation satellites by the sorting algorithm, the binarization and modular two addition, which are called the public sub-ranging codes of the navigation satellite, wherein a sum of the number of ranging codes of all navigation satellites and the number of the public sub-ranging codes of all the navigation satellites is not greater than the total number of the combination taps of the real part and imaginary part of all the register state value of the complex shift pseudo-random code generator; there is relative, irrelative, orthogonal, non-orthogonal, partly orthogonal or partly non-orthogonal among the above public sub-ranging codes of the navigation satellite;

9) obtaining a plurality of special sub-ranging codes of other parallel signal transmission branches by modular two addition of the ranging codes of the navigation satellite and the public sub-ranging codes of the navigation satellite, which are called the special sub-ranging codes of the navigation satellite, saving the special sub-ranging codes of the navigation satellite in the file or data buffer area to meet the demands of the real-time spread spectrum of the navigation messages of each parallel signal transmission branch;

10) obtaining the special sub-ranging codes of the navigation satellite by the real-time generation, the file or the data buffer area, taking spread spectrum on the grouping satellite navigation messages of the parallel signal transmission branches separately by the special sub-ranging codes of the navigation satellite, wherein one of the above methods to obtain the special sub-ranging codes of the navigation satellite is available in use;

11) modulating a plurality of spread spectrum signals of the parallel signal transmission branches separately by a carrier with the different frequency offset, a complex carrier with the different frequency offset, a different phase orthogonal sub-carrier with the different frequency offset or a different phase orthogonal complex sub-carrier with the different frequency offset, wherein one of the modulation methods is available in use;

12) distributing the signal power of each branch reasonably by the adjustment of the gain factors of the special sub-ranging codes of the navigation satellite of each branch to carry out the power balance, superposing the carrier modulation signals of all parallel signal transmission branches or the carrier modulation signals of the satellite navigation signals of the other branch or combining into one way signals, which are less interference because of the uncorrelation of the special sub-ranging codes of the navigation satellite for each parallel signal transmission branch;

13) adding the Gauss white noise or the other noise with some ratio of signal and noise to the superposed or combined one-way signals to form a plurality of basic band satellite navigation signals;

14) transmitting the basic band satellite navigation signals from single-antenna;

15) receiving the basic band satellite navigation signals by single-antenna single-channel, single-antenna single-channel comprising the sub-channel, single-antenna multichannel, single-antenna multichannel comprising the sub-channel; the channel realization mode is $m_r \times n_r$, where $m_r$ is a channel number, $n_r$ is a sub-channel number of each channel, demodulating the navigation signals of the parallel signal transmission branches in range of the given number of the satellite transmission end real-time separately in order for each sub-channel, multiantenna single-channel, multiantenna single-channel comprising the sub-channel, multiantenna multichannel, or multiantenna multichannel comprising the sub-channel; wherein the single-antenna single-channel or single-antenna single-channel comprising the sub-channel is the channel that each antenna only connects one signal dealing channel; the channel or its containing sub-channel is responsible for receiving and dealing of all satellites navigation signals; the single-antenna multichannel, single-antenna multichannel comprising the sub-channel is the channel that each antenna connects no less than two signal dealing channels and each channel or its containing sub-channel is responsible for receiving and dealing of the corresponding satellites navigation signals; the multiantenna single-channel or their containing sub-channels are the channel that each antenna only connects one signal dealing channel separately; the multiantenna multichannel or their containing sub-channels are the channel that each antenna connects no less than two signal dealing channels and each channel or its containing sub-channel is responsible for receiving and dealing of the corresponding satellites navigation signals; needing the number of the channels or their containing sub-channels for signal dealing to guarantee the real-time demodulation of the received satellite navigation signals, choosing one of the channels and its $n_r$ sub-channels to explain the real-time demodulation process on the navigation signals of one navigation satellite because each channel demodulates separately the navigation signals of no less than one navigation satellite and the realization mode is the same;

16) choosing the sub-channel number $i_r (1 \leq i_r \leq n_r)$, where a parallel signal transmission branch number it that the sub-channel corresponds to the satellite transmission end is equal to a parallel signal transmission branch start number that the sub-channel of the channel corresponds to the satellite transmission end;

17) intercepting a length of the basic band satellite navigation signals;

18) generating the local carrier or the complex carrier;

19) obtaining the de-carrier signals by the Doppler frequency shift carrier matching method to remove the carriers from the satellite navigation signals of 17);

20) obtaining the special sub-codes of the parallel signal transmission branches by the real-time generation, the file, or the data buffer; carrying out the relative dealing based on FFT circle relative algorithm with the special sub-codes by the de-carrier signals through the sorting algorithm and the binarization; when $i_r$=1 and there exists the relative peak, it shows that the navigation signals of the navigation satellite exist in the received signals; when $i_r$>1 and there exists the relative peak, demodulating the navigation messages from the de-carrier signals of the received basic band satellite navigation signals of the branch according to the relative peak position, performing 21), otherwise, performing 17);

21) it=it+1, when it ≤ the parallel signal transmission branch end number that the sub-channel of the channel corresponds to the satellite transmission end, performing 17), otherwise, performing 22);

22) converting the grouping navigation messages from the parallel to the serial obtained from the parallel signal transmission branches of each sub-channel, obtaining the complete navigation messages of one navigation satellite from the channel;

23) obtaining the navigation messages of the visual navigation satellites by each channel from 16) to 22), carrying out the positioning solution by selecting navigation messages of four navigation satellites and using microprocessor with no less than one core, realizing the fast navigation positioning; and

24) end.

2. The method of claim 1, **characterized in that** in 4), the single state parameter, multistate parameter, or the function comprising the different parameters of the feedback end of the complex shift pseudo-random code generator driven by the nonlinear functions is used repeatedly in course of constructing the nonlinear functions; the constructed nonlinear functions are used repeatedly in the action formulas of the different nonlinear functions, which work in the same frequency or different frequency.

3. The method of claim 1, **characterized in that** in 7), the pseudo-random number is output separately from the taps of the real part and the imaginary part of the binarization register state value; when part of the numerical value is different, the other part of the numerical value is the same or their numerical value is all the same for the tapped output of the pseudo-random code sequence and the other tapped output of the pseudo-random code sequence, the following way is taken: the pseudo-random code sequence is reversed, the pseudo-random code sequence is shifted circularly in the given length, the pseudo-random code sequence is mixed with the other pseudo-random code sequence, or one of the pseudo-random code sequence is deleted.

4. The method of claim 1, **characterized in that** in 8), the navigation satellite public sub-ranging codes are generated by the other part tap combination of the parameter, the function, or the register state value of each sub pseudo-random code generator of the pseudo-random code generator constructed by the different sub pseudo-random code generators to generate the navigation satellite ranging codes, or by the tap combination of the parameter, the function of the other pseudo-random code generator, or generated alone by the tap combination of the parameter, the function, or the register state value of each sub pseudo-random code generator of the other pseudo-random code generator constructed by the different sub pseudo-random code generators, or the output real number of these taps is modulated separately by the real number offset carrier and the pseudo-random performance of the subsequent generated pseudo-random code is maintained by the relative parameter adjustment of the nonlinear functions to construct the pseudo-random code generator, or the different navigation satellite ranging codes, the different navigation satellite public sub-ranging codes, or the different navigation satellite special sub-ranging codes are generated to meet the different navigation service demands for the different navigation frequency points by the united way to change the initial value or the relative parameters of the nonlinear functions to construct the pseudo-random code generator, or the nonlinear functions to construct the pseudo-random code generator are designed again under certain condition of the parameter, the function, or the structure of the registers and the taps of the state value being not changed; the phases of the navigation satellite ranging codes are distributed by the part tap combination of all the tap combination of the parameter, the function, or the state value of the registers of each sub pseudo-random code generator of the pseudo-random code generator, the phases of the navigation satellite public sub-ranging codes or the navigation satellite special sub-ranging codes are distributed by the other part tap combination, and the remaining tap combination is used to be a backup for its future development.

5.  The method of claim 1, **characterized in that** in 9), the navigation satellite ranging codes are used alone to be the special sub-ranging codes of one of the parallel signal transmission branches, or taken by modular two addition or mixed with the navigation satellite public sub-ranging codes to be the special sub-ranging codes of one of the parallel signal transmission branches, or the navigation satellite special sub-ranging codes are modulated by BOC and their pseudo-random performance is maintained by the relative parameter adjustment of the nonlinear functions to construct the pseudo-random code generator; all navigation satellite special sub-ranging codes are saved beforehand in order in the special file or the data buffer to promote the real-time spread spectrum of the navigation messages of the parallel signal transmission branch or the real-time demodulation of the navigation signals.

6.  The method of any one of claims 1-5, **characterized in that** in 10), each parallel signal transmission branch transmits the same or different kind of the non-multiplexing or the multiplexing satellite navigation frequency signals, the satellite navigation signals, or the satellite communication signals at the same time.

7.  The method of claim 1, **characterized in that** in 14), the carrier signals of the parallel signal transmission branches are divided into the different part, or superposed or combined separately by the carrier signals of the satellite navigation signals of the other branch and the multiantenna transmission is carried out through at least two antennas, or the spread spectrum signals of the parallel signal transmission branches are partly or totally superposed or combined by the spread spectrum signals of the other branch satellite navigation signals and modulated by the same carrier or the different sub-carrier with phase orthogonality.

8.  The method of claim 1, **characterized in that** in 15), the multiplexing or the non-multiplexing satellite pilot signals, the satellite navigation signals, the satellite communication signals or the satellite control signals are received or transmitted by single-antenna single-channel, single-antenna single-channel comprising the sub-channel, single-antenna multichannel, single-antenna multichannel comprising the sub-channel, multiantenna single-channel, multiantenna single-channel comprising the sub-channel, or multiantenna multichannel, multiantenna multichannel comprising the sub-channel among the navigation satellites and the ground receiving ends or the navigation satellites and the ground receiving stations or the navigation satellites or the Ground-based Augmentation Systems, the navigation satellites and the ground receiving ends; the same number or different number of the sub-channels is contained by each channel comprising the sub-channel.

9.  A system of real-time transmission and demodulation of BeiDou satellite navigation signals, the system comprising:

    a module of parallel signal transmission branch construction, which is used to meet the demands of the grouping of the navigation messages and the navigation signals quasi-real-time transmission or real-time transmission;
    a module of navigation messages being grouped and converted from the serial to the parallel, which is used to group the navigation messages in the given length, and convert the serial transmission to the parallel transmission and to promote the transmission efficiency;
    a module of a complex shift pseudo-random code generator driven by the nonlinear functions construction, which is used to design the real part by a group of the nonlinear functions with the weights of different nonlinear diffusion coefficients; the nonlinear function is composed of the mixed computation of a kind of single state parameter, multistate parameter or the function comprising the different parameters; the imaginary part is designed by another group of the nonlinear functions with the weights of the different nonlinear diffusion coefficients; the nonlinear function is composed of the mixed computation of another kind of single state parameter, multistate parameter or the function comprising the different parameters; the nonlinear function interaction is driven by the action value which is obtained by the mixed computation from the relative register taps; the action value is as the feedback end obtained by the mixed computation of the action value of the stated nonlinear functions to construct the complex shift pseudo-random code generator driven by the nonlinear functions;

a module of sub-ranging codes generation, which is used to output the pseudo-random number through one part of the combination taps of the real part and imaginary part of the relative register state value of the complex shift pseudo-random code generator driven by the nonlinear functions; the navigation satellite ranging codes are obtained by the sorting algorithm, the binarization and modular two addition of the pseudo-random number; the public sub-ranging codes are obtained by the sorting algorithm, the binarization and modular two addition of the pseudo-random number through another part of the combination taps of the real part and imaginary of the relative register state value of the complex shift pseudo-random code generator driven by the nonlinear functions; the special sub-ranging codes are gained by modular two addition of the public sub-ranging codes and the ranging codes of the navigation satellite separately;

a module of spread spectrum, which is used to take spread spectrum on the grouping navigation messages of the parallel signal transmission branches by the special sub-ranging codes of the navigation satellite separately;

a module of carrier modulation, which is used to modulate separately the spread spectrum signals of the parallel signal transmission branches by the same carrier with the different frequency offset, the same complex carrier with the different frequency offset, the different phase orthogonal sub-carrier with the different frequency offset or the different phase orthogonal complex sub-carrier with the different frequency offset;

a module of signal superposition, which is used to superpose or combine the spread spectrum signals of all or part of the parallel signal transmission branches, the carrier modulation signals of all or part of the parallel signal transmission branches, the spread spectrum signals of the satellite navigation signals of the other branch, or the carrier modulation signals of the satellite navigation signals of the other branch;

a module of navigation signal generation, which is used to add Gauss white noise or the other noise to the superposed or combined signals to generate the basic band satellite navigation signals;

a module of tracing and capturing, which is used to decarrier, despread and demodulate the navigation signals of each parallel signal transmission branch for the transmission end of the navigation satellite separately;

a module of converting the parallel to the serial of the navigation messages, which is used to convert the parallel transmission to the serial transmission of the grouping navigation messages obtained from the decarrier, the despreading and the demodulation of the parallel signal transmission branches and realize the obtaining of the total navigation messages; and

a module of positioning and solution, which is used to take the obtained navigation messages to realize the fast navigation and positioning.

10. The system of claim 9, **characterized in that** the module of tracing and capturing operates as follows:

i) receiving the basic band satellite navigation signals by the receiving end to use single-antenna multichannel or single-antenna multichannel comprising the sub-channel;

ii) choosing the sub-channel number $i_r (1 \leq i_r \leq n_r)$, where the parallel signal transmission branch number it that the sub-channel corresponds to the satellite transmission end = the parallel signal transmission branch start number that the sub-channel of the channel corresponds to the satellite transmission end;

iii) intercepting a length of the basic band satellite navigation signals;

iv) generating the local carrier or the complex carrier;

v) obtaining the de-carrier signals by the Doppler frequency shift carrier matching method to remove the carriers of the satellite navigation signals from iii);

vi) obtaining special sub-codes of the parallel signal transmission branch by the real-time generation, the file, or the data buffer; carrying out the relative dealing based on FFT circle relative algorithm with the special sub-codes by the de-carrier signals through the sorting algorithm and the binarization; when $i_r=1$ and there exists the relative peak, it shows that exist the navigation signals of the navigation satellite in the received signals; when $i_r>1$ and there exists the relative peak, the navigation messages are demodulated from the de-carrier signals of the received basic band satellite navigation signals of the branch according to the relative peak position, perform vii), otherwise, perform iii);

vii) it=it+1, when it ≤ the parallel signal transmission branch end number that the sub-channel of the channel corresponds to the satellite transmission end, performing iii), otherwise, performing viii); and

viii) converting the grouping navigation messages from the parallel to the serial obtained from the parallel signal transmission branches of each sub-channel; and gaining the complete navigation messages of one navigation satellite from the channel.

Construction of a large-scale parallel signal transmission branch

↓

Satellite navigation message

↓

Large-scale grouping

↓

Sending to the large-scale parallel transmission branch

↓

Spectrum Spreading ← Ranging sub-code for the parallel signal transmission branch

↓

Carrier modulation

↓

Superposition

↓

Noise addition

↓

Single-antenna transmission

Construction of a complex shift pseudo-random code generator driven by the nonlinear functions

↓

Parameter setting

↓

Initialization

↓

Ranging sub-code for the parallel signal transmission branch

Single-antenna multichannel reception → Tracing and capturing of signals of each parallel branch at the transmission end → De-spreading

↓

End ← Positioning solution ← Navigation message ← Change from parallel transmission to serial transmission

**FIG. 1**

Amplitude

Length of the codes(bits)

**FIG. 2**

Amplitude

Length of the codes(bits)

**FIG. 3**

EP 3 614 177 A1

FIG. 4

FIG. 5

FIG. 6

FIG. 7

Relative value

Length of the codes(bits)

**FIG. 8**

EP 3 614 177 A1

```
┌─────────────────────────────────────────────────────┐
│      The module of the parallel signal transmission  │
│                 branch construction                  │
└─────────────────────────────────────────────────────┘
                          │
                          ▼
┌─────────────────────────────────────────────────────┐
│      The module of the navigation messages being     │
│  grouped and converted from the serial to the parallel│
└─────────────────────────────────────────────────────┘
                          │
                          ▼
┌─────────────────────────────────────────────────────┐
│     The module of the complex shift pseudo-random    │
│    code generator driven by the nonlinear functions  │
│                    construction                      │
└─────────────────────────────────────────────────────┘
                          │
                          ▼
┌─────────────────────────────────────────────────────┐
│      The module of the sub-ranging code generation   │
└─────────────────────────────────────────────────────┘
                          │
                          ▼
┌─────────────────────────────────────────────────────┐
│            The module of spread spectrum             │
└─────────────────────────────────────────────────────┘
                          │
                          ▼
┌─────────────────────────────────────────────────────┐
│         The module of the carrier modulation         │
└─────────────────────────────────────────────────────┘
                          │
                          ▼
┌─────────────────────────────────────────────────────┐
│       The module of the signal superposition         │
└─────────────────────────────────────────────────────┘
                          │
                          ▼
┌─────────────────────────────────────────────────────┐
│     The module of the navigation signal generation   │
└─────────────────────────────────────────────────────┘
                          │
                          ▼
┌─────────────────────────────────────────────────────┐
│        The module of tracing and capturing           │
└─────────────────────────────────────────────────────┘
                          │
                          ▼
┌─────────────────────────────────────────────────────┐
│  The module of converting the parallel to the serial │
│            of the navigation message                 │
└─────────────────────────────────────────────────────┘
                          │
                          ▼
┌─────────────────────────────────────────────────────┐
│      The module of positioning and solution          │
└─────────────────────────────────────────────────────┘
                          │
                          ▼
┌─────────────────────────────────────────────────────┐
│                        End                           │
└─────────────────────────────────────────────────────┘
```

**FIG. 9**

# INTERNATIONAL SEARCH REPORT

| International application No. |
|---|
| PCT/CN2018/082729 |

**A. CLASSIFICATION OF SUBJECT MATTER**

G01S 19/02 (2010.01) i

According to International Patent Classification (IPC) or to both national classification and IPC

**B. FIELDS SEARCHED**

Minimum documentation searched (classification system followed by classification symbols)

G01S; H04B; H04Q

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: 北斗, 伽利略, 格洛纳斯, 卫星, 全球, 导航, 定位, 并行, 并列, 并发, 支路, 分支, 链路, 通道, 通路, 串, 测距, 随机, 码, 复数, 实部, 虚部, 基带, beidou, BDS, COMPASS, GALILEO, GLONASS, GPS, satellite, navigat+, parallel+, rang???, random, code, complex, baseband

**C. DOCUMENTS CONSIDERED TO BE RELEVANT**

| Category* | Citation of document, with indication, where appropriate, of the relevant passages | Relevant to claim No. |
|---|---|---|
| PX | CN 106932787 A (WUHAN UNIVERSITY), 07 July 2017 (07.07.2017), claims 1-10 | 1-10 |
| A | CN 102147473 A (SPACE STAR TECHNOLOGY CO., LTD.), 10 August 2011 (10.08.2011), description, paragraphs [0008]-[0015] | 1-10 |
| A | CN 104765044 A (HWASMART CORPORATION LTD.), 08 July 2015 (08.07.2015), entire document | 1-10 |
| A | CN 106526624 A (GUILIN UNIVERSITY OF ELECTRONIC TECHNOLOGY), 22 March 2017 (22.03.2017), entire document | 1-10 |
| A | US 2008309552 A1 (L-3 COMMUNICATIONS CORPORATION), 18 December 2008 (18.12.2008), entire document | 1-10 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 May 2018 | 27 June 2018 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | ZHANG, Feng Telephone No. 86-(10)-53961628 |

Form PCT/ISA/210 (second sheet) (January 2015)

## INTERNATIONAL SEARCH REPORT
### Information on patent family members

| International application No. |
| --- |
| PCT/CN2018/082729 |

| Patent Documents referred in the Report | Publication Date | Patent Family | Publication Date |
| --- | --- | --- | --- |
| CN 106932787 A | 07 July 2017 | CN 107911160 A | 13 April 2018 |
| CN 102147473 A | 10 August 2011 | None | |
| CN 104765044 A | 08 July 2015 | None | |
| CN 106526624 A | 22 March 2017 | None | |
| US 2008309552 A1 | 18 December 2008 | US 2007255495 A1 | 01 November 2007 |

Form PCT/ISA/210 (patent family annex) (January 2015)